# EUROPÄISCHE PATENTSCHRIFT

(11) **EP 1 448 925 B1**
(45) Veröffentlichungstag und Bekanntmachung des Hinweises auf die Patenterteilung: **08.02.2006**
(21) Anmeldenummer: 02792786.2
(22) Anmeldetag: 22.11.2002
(51) Int. Cl.: F16L 25/00, H01R 13/00

(54) **ANSCHLUSSSTÜCK, FLUIDLEITUNG UND FLUIDTECHNISCHE EINRICHTUNG**
CONNECTOR PIECE, FLUID LINE AND HYDRAULIC DEVICE
PIECE DE RACCORDEMENT, CONDUIT POUR FLUIDES ET INSTALLATION UTILISEE EN FLUIDIQUE

(30) Priorität: 28.11.2001 DE 20119352 U
(43) Veröffentlichungstag der Anmeldung: 25.08.2004
(73) Patentinhaber: FESTO AG & Co, 73734 Esslingen (DE)
(72) Erfinder: BRENNER, Hans-Walter, 70565 Stuttgart (DE); KERSCHER, Wolf-Dieter, 73230 Kirchheim (DE); ZOLLER, Klaus, 70186 Stuttgart (DE)
(74) Vertreter: Bregenzer, Michael
(86) Internationale Anmeldenummer: PCT/EP2002/013110
(87) Internationale Veröffentlichungsnummer: WO 2003/046428

(56) Entgegenhaltungen:
- DE-A- 10 054 561
- PATENT ABSTRACTS OF JAPAN vol. 1997, no. 02, 28. Februar 1997 (1997-02-28) & JP 08 270845 A (SMC CORP), 15. Oktober 1996 (1996-10-15) in der Anmeldung erwähnt

## Beschreibung

Die Erfindung betrifft ein Anschlussstück für eine einen Fluidkanal enthaltende Fluidleitung, deren Wandung mindestens einen Signalleiter zur Übertragung elektrischer und/oder optischer Signale aufweist, mit einer Steckaufnahme für die Fluidleitung, mit einer Haltevorrichtung zum Halten der Fluidleitung in montiertem Zustand und mit mindestens einem Signalkontakt zur Herstellung einer Verbindung mit dem mindestens einen Signalleiter.

Die Erfindung betrifft ferner ein Verfahren zur Montage einer Fluidleitung an einem derartigen Anschlussstück sowie eine fluidtechnische Einrichtung, beispielsweise eine Ventilanordnung, ein Wartungsgerät oder eine Steuereinrichtung für eine Ventilanordnung und/oder ein Wartungsgerät, mit einem derartigen Anschlussstück.

Aus der japanischen Offenlegungsschrift P-H8-270845 ist beispielsweise eine Fluidleitung mit zwei in ihrer wandung angeordneten elektrischen Signalleitern bekannt. Die Fluidleitung ist in ein Anschlussstück einsteckbar. Im Anschlussbereich stehen die Signalleiter vor die Fluidleitung vor und gehen mit Signalkontakten des Anschlussstücks Kontakt-Verbindungen ein. Das Anschlussstück bzw. die Fluidleitung sind an einer fluidtechnischen Einrichtung angeordnet.

Die deutsche Offenlegungsschrift DE 100 54 561 A1 betrifft eine Fluidleitung, die in ein Anschlussstück einsteckbar ist. An dem Anschlussstück ist ein feststehender Dorn vorhanden, der in Richtung der Fluidleitung nach vorn vorsteht. Der Dorn dringt in einen Signalleiterkanal der Fluidleitung ein.

Über die Fluidleitung können sowohl ein fluidisches Druckmedium als auch Steuer- und/oder Meldesignale von und zu einer fluidtechnischen Einrichtung transportiert werden. Allerdings ist die Kontaktsicherheit der Verbindung zwischen dem fluidleitungsseitigen Signalleiter und Signalkontakt des Anschlussstücks problematisch. Die Fluidleitung wird durch das Fluid, also das Druckmedium, beansprucht und ist daher keinesfalls statisch fest mit dem Anschlussstück verbunden. Vielmehr kommt es bei Druckänderungen, insbesondere bei Druckstößen, zu einer Längsbewegung der Fluidleitung, unter anderem auch in ihrem Anschlussbereich, mit dem sie in dem Anschlussstück sitzt. Daher kann der mindestens eine Signalkontakt, selbst wenn er der Längsbewegung federnd zu folgen versucht, nicht zuverlässig die erforderliche Kontakt-Verbindung zum jeweiligen Signalleiter gewährleisten. Die Kontaktprobleme können zu Fehlfunktionen oder gar zu Beschädigungen/Zerstörungen führen, wenn beispielsweise elektrische bzw. optische Kurzschlüsse auftreten oder ein Steuer- oder Meldesignal gar nicht oder nicht richtig übertragen wird.

Es ist daher Aufgabe der vorliegenden Erfindung, die Kontaktsicherheit am Kontakt zwischen dem mindestens einen Signalleiter und dem mindestens einen Signalkontakt bei einem Anschlussstück bzw. einer Fluidleitung und einer fluidtechnischen Einrichtung der eingangs genannten Art zu verbessern.

Zur Lösung der Aufgabe sind ein Anschlussstück gemäß der technischen Lehre des Anspruchs 1 und ein Verfahren gemäß der technischen Lehre eines weiteren unabhängigen Anspruchs vorgesehen.

Bei der fluidtechnischen Einrichtung der eingangs genannten Art ist zur Lösung der Aufgabe mindestens ein vorgenanntes Anschlussstück vorgesehen.

Ein Grundgedanke der Erfindung ist dabei, den Signalkontakt in Einsteckrichtung der Fluidleitung insgesamt verschieblich anzuordnen, so dass er ohne Weiteres einer Längsbewegung der Fluidleitung im Anschlussstück folgen kann. Unterstützt wird der Signalkontakt dabei durch Federmittel, die ihn in Kontakt mit dem jeweiligen Signalleiter halten. In Einsteckrichtung ist der Signalkontakt zwar verschieblich, quer zur Einsteckrichtung befindet sich der Signalkontakt jedoch im Wesentlichen in einer relativ zu dem zu kontaktierenden Signalleiter festen Position.

Der mindestens eine Signalleiter ist in einem Signalleiterkanal der Fluidleitung angeordnet. Der mindestens eine Signalkontakt ist derart ausgestaltet, dass er von der Stirnseite der Fluidleitung her in einen Abschnitt des Signalleiterkanals eindringen kann. Dort wird er beispielsweise reibschlüssig, insbesondere in Klemmsitz, gehalten. Zum Eindringen in den Signalleiterkanal weist der Signalkontakt zweckmäßigerweise eine Spitze auf. Der Signalleiterkanal ist z.B. im Innern eines in den Fluidkanal ragenden Vorsprungs angeordnet.

Vorteilhafte Ausgestaltungen der Erfindung ergeben sich aus den abhängigen Ansprüchen und der Beschreibung.

Der mindestens eine Signalkontakt ist zweckmäßigerweise in quer zur Einsteckrichtung der Fluidleitung abgestützter Weise an einem Kontaktträger festgelegt, der an dem Anschlussstück in der Einsteckrichtung der Fluidleitung verschieblich gelagert ist.

Vorzugsweise ist der mindestens eine Signalkontakt an der Fluidleitung relativ zu dem mindestens einen Signalleiter zumindest reibschlüssig festlegbar. Dadurch wird die Wirkung der Federmittel vorteilhaft unterstützt.

Dem mindestens einen Signalkontakt ist zweckmäßigerweise ein entgegen der Einsteckrichtung wirkender Anschlag zugeordnet, gegen den sich der mindestens eine Signalkontakt beim Einstecken der Fluidleitung in die Steckaufnahme abstützen kann. Diese Maßnahme wirkt besonders vorteilhaft in Kombination mit der vorgenannten Maßnahme: der Signalkontakt kann sich beim Einstecken der Fluidleitung gegen Anschlag abstützen, so dass der Signalkontakt in einen Abschnitt des Signalleiterkanals eindringen kann. Der Anschlag kann zudem den Signalkontakt bzw. die Federmittel gegenüber einer Überbeanspruchung schützen.

Zweckmäßigerweise ist eine Kontakt-Dichteinrichtung vorgesehen, die den mindestens einen Signalkontakt im montierten Zustand gegenüber dem mindestens einen Fluidkanal abdichtet. Im Fluid bzw. Druckmedium enthaltene Schmutzpartikel oder sonstige oxidierende und/oder verschmutzende Stoffe können den Kontakt zwischen Signalleiter und Signalkontakt nicht beeinträchtigen.

Die Federmittel sind vorzugsweise in Richtung der Einstecköffnung vorgespannt. Sie sind ferner zweckmäßigerweise als eine zu dem mindestens einen Signalkontakt führende Verbindungsleitung ausgestaltet. Allerdings ist es auch möglich, dass die Federmittel mindestens eine von dem mindestens einen Signalkontakt separate Federanordnung enthalten.

Die Positionierung des mindestens einen Signalkontakts des Anschlussstücks relativ zu dem mindestens einen Signalleiter und somit die Handhabung der eingangs genannten wie auch der erfindungsgemäßen Anschlusstechnik wird durch die folgende, besonders bevorzugte Maßnahme erleichtert, die im Grunde genommen in Verbindung mit einem Anschlussstück oder einer fluidtechnischen Einrichtung der eingangs genannten Art bereits eine eigenständige Erfindung bildet. Dabei ist vorgesehen, dass im Bereich der Steckaufnahme zum drehwinkelorientierten Anordnen der Fluidleitung eine Führungseinrichtung angeordnet ist, die in den mindestens einen Fluidkanal einführbar ist und bei diesem Einführen an mindestens einer in dem mindestens einen Fluidkanal angeordneten Drehwinkelcodierung entlang gleitet, so dass die Fluidleitung vor einer Kontaktierung des mindestens einen Signalkontakts mit dem mindestens einen Signalleiter in eine vorbestimmte Drehwinkelstellung bringbar ist. Die gewünschte, zur Kontaktierung des mindestens einen Signalleiters erforderliche Drehwinkelposition ist leicht erreichbar. Die Bedienung ist einfach, wobei eine zuverlässige Kontaktierung des mindestens einen Signalleiters durch den mindestens eine Signalkontakt erzielt wird.

Zweckmäßigerweise ist die Führungseinrichtung derart ausgestaltet, dass beim Einführen der Fluidleitung die vorbestimmte Drehwinkelstellung bereits vor einer Fixierung der Fluidleitung durch die Haltevorrichtung erreichbar ist. Die Fluidleitung kann leicht in die Drehwinkelstellung gedreht werden, bevor die Haltevorrichtung eine Drehung erschwert oder gar verhindert.

Vorzugsweise ist die Führungseinrichtung an der Steckaufnahme angeordnet. Dabei ist eine zentrale Anordnung bevorzugt.

Zweckmäßigerweise ist die Führungseinrichtung zum Zentrieren der Fluidleitung an der Steckaufnahme ausgestaltet, wobei allerdings auch eine von der Führungseinrichtung separate Zentriereinrichtung, beispielsweise ein Zentrierdorn oder dergleichen möglich ist.

Vorteilhaft ist an der Steckaufnahme ein Anschlag für die Fluidleitung angeordnet, vor den die Führungseinrichtung vorsteht. Die Fluidleitung kann dann sozusagen auf die Führungseinrichtung aufgesteckt und zu dem Anschlag vorgeschoben werden.

An der Führungseinrichtung ist zweckmäßigerweise mindestens eine mit der Drehwinkelcodierung zusammenwirkende Steuerkurve angeordnet. Die Steuerkurve bewirkt beispielsweise, dass die Fluidleitung in einer Art Dreh-/Steckbewegung an das Anschlussstück angesteckt werden kann, wobei die Steuerkurve beim Stecken der Fluidleitung eine überlagerte Drehbewegung impliziert. Allerdings ist auch ein umgekehrte Variante möglich, bei der die Drehwinkelcodierung mindestens eine Steuerkurve aufweist oder durch eine Steuerkurve gebildet wird.

Bei der Drehwinkelcodierung sind verschiedene, beliebig kombinierbare Varianten möglich: beispielsweise kann sie durch die Querschnittsgeometrie des Fluidkanals gebildet sein, wobei z.B. ein elliptischer oder vieleckiger Querschnitt zur Festlegung einer oder mehrer Drehwinkelpositionen geeignet ist. Ferner kann mindestens eine Nut und/oder mindestens ein Vorsprung als Drehwinkelcodierung vorgesehen sein. In einem derartigen Vorsprung ist vorzugsweise der mindestens eine Signalleiter angeordnet. Jedenfalls ist die Führungseinrichtung zur Zusammenwirkung mit der entsprechend ausgestalteten Drehwinkelcodierung ausgestaltet und weist hierfür beispielsweise an die Querschnittsgeometrie des Fluidkanals bzw. an die Nuten und Vorsprünge angepasste Zungen, Dorne oder dergleichen auf.

In einer besonders bevorzugten Variante der Erfindung weist die Führungseinrichtung mindestens zwei an die Kontur des Fluidkanals angepasste Zungen auf, die im montierten Zustand an der Kontur des Fluidkanals anliegen. Die Zungen sind zweckmäßigerweise durch einen Stabilisierungssteg miteinander verbunden.

Abhängig von Art, Funktionsweise und Anzahl des oder der Signalleiter der Fluidleitung kann die vorbestimmte Drehwinkelstellung eine einzige Drehwinkelstellung sein oder es können mehrere rotationssymmetrische Drehwinkelstellungen vorgesehen sein. Wenn nur ein einziger Signalleiter vorhanden ist, ist nur eine einzige Drehwinkelstellung möglich. Sind jedoch beispielsweise zwei Signalleiter vorhanden, bei denen es beispielsweise auf eine elektrische Polarität nicht ankommt, können z.B. auch zwei zueinander rotationssymmetrische Drehwinkelstellungen mittels der erfindungsgemäßen Führungseinrichtung ermittelbar sein.

Die Führungseinrichtung ist vorteilhaft an dem Kontaktträger angeordnet.

Die Führungseinrichtung steht zweckmäßigerweise vor den mindestens einen Signalkontakt vor. Dadurch ergibt sich folgender Ablauf beim Anstecken der Fluidleitung an das Anschlussstück: die Führungseinrichtung wird in den Fluidkanal eingeführt und dabei wird die vorbestimmte Drehwinkelstellung der Fluidleitung relativ zum Anschlussstück erreicht. Erst in dieser Drehwinkelstellung gelangt der mindestens eine Signalkontakt in Kontakt mit dem mindestens einen Signalleiter. Er kann dann beispielsweise in einer Längsbewegung in Einsteckrichtung in einen Signalleiterkanal der Fluidleitung eindringen.

Bei der Fluidleitung sind folgende Maßnahmen bevorzugt:

Die Fluidleitung weist vorzugsweise mindestens einen Fluidkanal mit mindestens einer Drehwinkelcodierung auf, in den eine Führungseinrichtung des Anschlussstücks einführbar ist, wobei die Führungseinrichtung bei diesem Einführen an der mindestens einen Drehwinkelcodierung entlang gleiten kann.

Ihre Stirnseite ist vorzugsweise im Wesentlichen plan. Die plane Stirnseite wird beispielsweise durch Abschneiden der Fluidleitung erzielt.

Die Fluidleitung kann als flexible Schlauchleitung und/oder als starre Rohrleitung ausgestaltet sein.

Die Wandung der Fluidleitung ist zweckmäßigerweise für eine optimale Druckdichtigkeit im Anschlussbereich ausgestaltet. Beispielsweise ist sie in einer bevorzugten Variante der Erfindung außenseitig kalibriert. Es versteht sich, dass die Fluidleitung zweckmäßigerweise über ihre gesamte Länge außenseitig kalibriert ist, so dass sie an beliebiger Stelle z.B. durch Abschneiden ablängbar und mit einem erfindungsgemäßen Anschlussstück verbindbar ist.

Ferner ist bei der Fluidleitung bevorzugt, dass sie zumindest in ihrem für das Anschlussstück vorgesehenen Anschlussbereich eine homogene Außenkontur ohne Vorsprünge und Nuten aufweist. Die Außenkontur ist zweckmäßigerweise ausschließlich oder im Wesentlichen konvex, also nach außen gekrümmt, wobei plane, nicht gekrümmte Abschnitte möglich sind.

Die Drehwinkelcodierung ist zweckmäßigerweise an der Innenseite der Wandung der Fluidleitung angeordnet. Sie kann auch durch die Wandung gebildet werden.

Die Wandung der Fluidleitung besteht zweckmäßigerweise im Wesentlichen aus Kunststoff.

Bei dem mindestens einen Signalleiter kann es sich zwar um einen in Längserstreckungsrichtung der Fluidleitung im Wesentlichen inkompressiblen Leiter handeln, z.B. um eine Glasfaseranordnung oder einen Metalldraht. Vorzugsweise ist der mindestens eine Signalleiter in Längserstreckungsrichtung der Fluidleitung kompressibel. Insbesondere durch Einwirkung des mindestens einen Signalkontaktes kann der Signalleiter beim Einstecken der Fluidleitung an das Anschlussstück sozusagen in die Wandung hineingeschoben bzw. dort hin verdrängt werden.

Das Anschlussstück bildet vorzugsweise einen integralen Bestandteil der fluidtechnischen Einrichtung. Zweckmäßigerweise wird das Anschlussstück zumindest teilweise durch ein Gehäuse der fluidtechnischen Einrichtung gebildet, wobei beispielsweise die Steckaufnahme am Gehäuse der fluidtechnischen Einrichtung angeordnet ist oder durch dieses gebildet wird.

Im folgenden werden mehrere Ausführungsbeispiele der Erfindung anhand der Zeichnung erläutert. Es zeigen:
- Figur 1: teilweise im Querschnitt und mit teilweise fehlenden Komponenten ein erfindungsgemäßes Anschluss- stück 10 und eine erfindungsgemäße Fluidleitung 11 beim Einsteckvorgang,
- Figur 2: eine fluidtechnische Anordnung 12, bei der eine erfindungsgemäße Anschlusstechnik realisiert ist,
- Figur 3a: das Anschlussstück 10 und die Fluidleitung 11 gemäß Figur 1 ebenfalls in Querschnittsansicht und beim Einsteckvorgang, wobei im Unterschied zu Figur 1 alle Komponenten des Anschlussstückes 10 gezeigt sind,
- Figur 3b: die Ansicht aus Figur 3a, wobei die Fluidleitung 11 vollständig in das Anschlussstück 10 eingesteckt ist,
- Figur 3c: eine Explosionszeichnung des Anschlussstücks 10 und der Fluidleitung 11 gemäß Figuren 1, 3a, 3b,
- Figur 3d: eine vereinfachte Variante des Anschlussstücks 10 gemäß Figuren 3a bis 3c,
- Figuren 4a-4d: Querschnittsansichten erfindungsgemäßer Fluidleitungen, in deren Fluidkanäle jeweils eine erfin dungsgemäße Führungseinrichtung eingeführt ist, und
- Figur 5: ein Anschlussstück 13, das im Vergleich zum Anschlussstück 10 teilweise modifiziert ist.

Bei der fluidtechnischen Anordnung 12 sind Ventilanordnungen 60 einer Ventilstation oder Ventilinsel 61 mit fluidtechnischen Einrichtungen 62 durch Fluidleitungen 11 verbunden. Bei den Einrichtungen 62 handelt es sich um mit Druckluft betriebene Arbeitszylinder, beispielsweise in Gestalt von pneumatischen Linearantrieben, Hubzylindern oder dergleichen. Die Ventilanordnungen 60 enthalten vorliegend pneumatische Vorsteuerventile, die elektrisch/elektromagnetisch betätigbar sind. Entsprechend der Vorsteuerung durch die Ventilanordnungen 60 können die Arbeitszylinder 62 mit Druckluft beaufschlagt werden oder kann Druckluft aus den Arbeitszylindern ausströmen, wobei deren jeweilige Kolben betätigt werden.

Die Ventilstation 61 wird über eine Druckluft-Versorgungsleitung 66 mit Druckluft versorgt. Die Ventilanordnungen 60 werden von einer lokalen Steuerung 65 der Ventilstation 61 gesteuert und überwacht. Eine zentrale Steuerung 63 steuert und überwacht die Ventilstation 61 über eine Steuer-/Meldeleitung 64, die beispielsweise auf einem Bus vorgesehen ist.

Die Arbeitszylinder 62 sind über Fluidleitungen 11 mit der Ventilstation 61 verbunden. Die Fluidleitungen 11 sind zur kombinierten Übertragung von Fluid, vorliegend Druckluft und elektrischer und/oder optischer Signale auf einer einzigen Verbindungsleitung vorgesehen. Bei den Signalen handelt es sich beispielsweise um elektrische oder optische Signale, mit denen Sensoren 30, beispielsweise Positionssensoren, Zustandsinformationen an die Ventilstation 61 übertragen oder mit denen elektrisch bzw. optisch ansteuerbare Aktoren für fluidtechnische Einrichtungen, die allerdings in der Figur nicht dargestellt sind, steuerbar sind.

Die Fluidleitungen 11 sind vorliegend als flexible Schlauchleitungen ausgeführt. Sie sind beispielsweise extrudierte Kunststoffleitungen, deren Wandung 15 mindestens einen Fluidkanal 14 umschließt, der im Innern der jeweiligen Fluidleitung 11 verläuft. Die Wandung 15 weist vorliegend außen eine exakt kreisrunde und innen eine im wesentlichen kreisrunde, den Querschnitt der Fluidleitung 11 definierende Kontur auf. In der Wandung 15 sind Signalleiter 16a und 16b angeordnet, die vorliegend aus elektrisch leitendem Material, beispielsweise aus Kupferlitze oder -draht bestehen. An denjenigen Stellen, an denen die Signalleiter 16a, 16b in der Wandung 15 angeordnet sind, weist diese einen verstärkten Querschnitt auf. Dieser verstärkte Querschnitt wird vorliegend durch insbesondere rippenartige, sich über die gesamte Länge der Fluidleitung 11 erstreckende Vorsprünge 18 gebildet, die an gegenüberliegenden Innen-Seiten der Wandung 15 in den Fluidkanal 14 hineinragen und in denen jeweils ein Signalleiterkanal 17 für einen Signalleiter 16a, 16b angeordnet ist. Bei der Fluidleitung 11 bildet die innenseitige Ausgestaltung der Wandung 15, insbesondere die rotationssymmetrische Anordnung der Vorsprünge 18 eine Drehwinkelcodierung 19 zur drehwinkelorientierten Anordnung der Fluidleitung 11 an Anschlussstücken 9, 10 der Ventilstation 61 bzw. der Arbeitszylinder 62.

Anhand des Anschlussstücks 10 und der Fluidleitung 11 wird im Folgenden die erfindungsgemäß verbesserte Anschlusstechnik näher erläutert. Die Fluidleitung 11 ist an beliebiger Stelle durch einfaches Abschneiden ablängbar. Die Signalleiter 16a, 16b stehen dann nicht vor eine beispielsweise durch Ablängen der Fluidleitung 11 gebildete, im wesentlichen plane Stirnseite 20 der Fluidleitung vor, sondern schließen mit dieser bündig ab oder treten gegenüber dieser sogar etwas zurück, was jedenfalls die Herstellung einer zuverlässigen Kontaktverbindung mit dem Anschlussstück 10 erschwert. Dennoch kann die Fluidleitung 11 in einfacher Weise am Anschlussstück 10 montiert werden und ist dann zuverlässig und dauerhaft belastbar mit diesem verbunden.

Die Montage der Fluidleitung 11 am Anschlussstück 10 gestaltet sich folgendermaßen: Die Fluidleitung 11 wird durch eine Einstecköffnung 21 hindurch in einen vorderen Abschnitt 22 einer Steckaufnahme 23 eingeschoben. Der vordere Abschnitt 22 wird durch einen zur Einstecköffnung 21 hin trichterförmig geöffneten Lösering 24 gebildet, der eine Löseeinrichtung zum Lösen einer Haltevorrichtung 25 dient.

Die Haltevorrichtung 25 enthält in die Steckaufnahme 23 ragende, elastisch biegbare Zähne oder Klauen 26, die bezüglich der Längsachse der Steckaufnahme 23 geneigt sind und an einem Haltering 27 gelagert sind, so dass sie beim Einstecken der Fluidleitung 11 in die Steckaufnahme 23 nach radial außen verdrängt werden können. Beim Herausziehen der Fluidleitung 11 aus der Steckaufnahme 23 oder einer sonstigen, auf die Fluidleitung 11 entgegen der Einsteckrichtung 28 wirkenden Kraft krallen sich die Zähne 26 in die Fluidleitung 11 hinein und halten diese somit fest.

Noch bevor allerdings die Haltewirkung der Haltevorrichtung 25 zum Tragen kommt, wird die Fluidleitung 11 beim Einstecken in die Steckaufnahme 23 durch eine Führungseinrichtung 32 in eine vorbestimmte Drehwinkelstellung gebracht, bei der Signalkontakte 31a, 31b des Anschlussstücks 11 elektrische Verbindungen zu den Signalleitern 16a, 16b herstellen können.

Die Führungseinrichtung 32 steht vor die Signalkontakte 31a, 31b in Richtung der Einstecköffnung 21 vor. Die Führungseinrichtung 32 ist in den Fluidkanal 14 einführbar und gleitet bei diesem Einführen an der durch die Gestalt des Fluidkanals 14 bzw. die Vorsprünge 18 gebildeten Drehwinkelcodierung 19 entlang, um die Signalkontakte 31a, 31b in eine geeignete Drehwinkelposition zu den Signalleitern 16a, 16b zu bringen.

Die Führungseinrichtung enthält einander gegenüberliegende Zungen 33, die sich zur Einstecköffnung 21 hin verjüngen, im vorliegenden Fall spitz zulaufen. In ihrem vorderen Bereich sind die Zungen 33 durch einen (Quer-)Steg 34 miteinander verbunden. Lediglich in dem seltenen Fall, dass die Zungen 33 beim Einführen der Fluidleitung 11 exakt auf die Vorsprünge 18 treffen, muss die Fluidleitung 11 durch eine bewusste Bedienhandlung geringfügig gedreht werden. Andernfalls - und dass ist auf Grund der geometrischen Gestalt der Kontur des Fluidkanals 14 bei weitem der häufigste Fall - bewirken Steuerkurven 35, die vorliegend durch Seitenflanken der spitz zulaufenden Vorderpartie der Zungen 33 gebildet werden, dass sich die Fluidleitung 11 und/oder das Anschlussstück 10 beim Einstecken in Einsteckrichtung 28 derart verdrehen, dass die vorbestimmte Drehwinkelposition erreicht wird. Die Steuerkurven 35 gleiten dabei an den als Drehwinkelcodierung 19 wirkenden Vorsprüngen 18 vorbei. Die Fluidleitung 11 erreicht jedenfalls sozusagen zwangsweise diese Drehposition, wobei zum Erreichen der Drehposition keine spezielle Bedienhandlung erforderlich ist.

Die Führungseinrichtung 32 dient zudem zum Zentrieren der Fluidleitung 11 an der Steckaufnahme 23. Die Zungen 33 sind hierfür an die Kontur des Fluidkanals 14 angepasst und weisen im konkreten Fall eine Wölbung quer zur Einsteckrichtung 28 und zum Außenumfang des Anschlussstücks 10 hin auf. Beim weiteren Einschieben der Fluidleitung 11 in die Steckaufnahme 23 gleitet die Fluidleitung 11 unter Verdrängung der Zähne 26 nach außen an der Haltevorrichtung 25 vorbei. Die Fluidleitung 11 ist dann sozusagen zwischen die Haltevorrichtung 25 und die Führungseinrichtung 32 geklemmt, so dass sie lediglich noch in Einsteckrichtung 28 beweglich ist. Derart vorfixiert, gelangt die Fluidleitung beim weiteren Einschieben zu den Signalkontakten 31a, 31b, die vorliegend als Metallstifte ausgestaltet sind.

Zur Einstecköffnung 21 hin weisen die Signalkontakte 31a, 31b Spitzen 36 auf, die beim weiteren Einsteckvorgang der Fluidleitung 11 in die Signalleiterkanäle 17 eindringen und somit elektrische Verbindungen zu den Signalleitern 16a, 16b herstellen. Beim Anschlussstück 10 sind die Signalkontakte 31a, 31b in Einsteckrichtung 28 verschieblich gelagert und mit Federmitteln-37 ausgestattet, so dass die Signalkontakte 31a, 31b auch bei einer eventuellen Längsbewegung der Fluidleitung 11 am Anschlussstück 10 mit den jeweiligen Signalleitern 16a, 16b in Verbindung bleiben. Derartige Längsbewegungen finden beispielsweise bei Druckstößen oder sonstigen Druckänderungen in der Fluidleitung 11 statt.

Vorliegend sind die Signalkontakte 31a, 31b an einem Kontaktträger 38 festgelegt, der in Einsteckrichtung 28 am Gehäuse 39 des Anschlussstückes 10 verschieblich gelagert ist. Der Kontaktträger 38 weist vorliegend die Gestalt einer Hülse auf, deren Außenumfang am Gehäuse 39 anliegt und in deren Innern die Federmittel 37 verlaufen. Die Federmittel 37 werden durch schraubenfederartig gewundene Abschnitte 40 von Zuleitungen 41a, 41b, gebildet, die zu den Signalkontakten 31a, 31b führen. Die Zuleitungen 41a, 41b werden vorliegend durch hintere Abschnitte der Signalkontakte 31a, 31b gebildet.

Die den Signalkontakten 31a, 31b entgegengesetzten Enden 42 der Zuleitungen 41a, 41b sind aus dem Anschlussstück 10 herausgeführt und beispielsweise mit Verbindungsleitungen 29 verbunden, die vom Anschlussstück 10 zum Sensor 30 führen. Die Zuleitungen 41a, 41b sind durch ein Isolatorelement 43 elektrisch und mechanisch zur Umgebung hin isoliert. Ein hülsenähnlicher Grundkörper 85 des Isolatorelements 43 ist im Gehäuse 39 angeordnet, wobei in der Wandung des Grundkörpers 85 die Zuleitungen 41a, 41b angeordnet sind. Vor das Gehäuse 39 stehen vorliegend flexible Abschnitte 44 des Isolatorelements 43 vor, in denen die Enden 42 der Zuleitungen 41a, 41b angeordnet sind. Die Abschnitte 44 sind zum Gehäuse 39 hin verschieblich und/oder zurückstülpbar und weisen trichterförmige Öffnungen auf, in die elektrische Kontakte zur Kontaktierung der Enden 42 eindringen können. Die Abschnitte 44 sind elastisch und können eine Art Wulst oder Überwurf über einen z.B. auf einer elektrischen Leiterplatte vorgesehenen Kontaktbereich bilden, auf dem die Enden 42 beispielsweise aufsitzen.

Zur Einstecköffnung 21 hin ist am Kontaktträger 38 ein Dichtring 45 angeordnet, der von den Signalkontakten 31a, 31b durchdrungen wird und diese hält. Im vorliegenden Fall dient der Dichtring 45 zur Festlegung der Signalkontakte 31a, 31b am Kontaktträger 38. Die Signalkontakte 31a, 31b könnten aber auch unmittelbar am Kontaktträger 38 festgelegt sein.

Die Federabschnitte 40 stützen sich an ihrem einen Ende am Kontaktträger 38 und/oder am Dichtring 45 und an ihrem anderen Ende am Gehäuse 39, im konkreten Fall am Isolatorelement 43 ab. Die Federmittel 37 sind entgegen der Einsteckrichtung 28 vorgespannt, wobei sich der Kontaktträger 38 entgegen der Einsteckrichtung 28 an einem Stützring 46 oder einem sonstigen Anschlag abstützt.

Vorliegend ist die Führungseinrichtung 32 am Kontaktträger 38 angeordnet und steht vor diesen in Richtung der Einstecköffnung 21 vor. Wenn nun beim Einstecken der Fluidleitung 11 in das Anschlussstück 10 - man könnte beim Ausführungsbeispiel auch 'beim Aufstecken der Fluidleitung 11 auf die Führungseinrichtung 32' sagen - die Signalkontakte 31a, 31b auf die Stirnseite 20 der Fluidleitung 11 bzw. auf die Signalleiter 16a, 16b treffen, schiebt die Fluidleitung 11 sozusagen die Signalkontakte 31a, 31b in Einsteckrichtung 28 relativ zum Gehäuse 39 nach hinten. Dabei wird der Kontaktträger 38 insgesamt nach hinten verschoben und werden die Federmittel 37 gespannt, bis der Kontaktträger 38 an einem Anschlag 47 anliegt, der durch eine Gehäuseabstufung des Gehäuses 39 und/oder den Grundkörper 85 des Isolatorelements 43 gebildet wird. Die Signalkontakte 31a, 31b können dann nicht mehr weiter in Einsteckrichtung 28 verschoben werden und dringen beim weiteren Einschieben der Fluidleitung 11 in das Anschlussstück 10 in Abschnitte 48 der Signalleiterkanäle 17 soweit ein, bis die Fluidleitung 11 auf den Dichtring 45 trifft, der einen der Steckaufnahme 23 zugeordneten Anschlag bildet. Der Dichtring 45 liegt dann dicht an der Stirnseite 20 der Fluidleitung an, so dass die Signalkontakte 31a, 31b gegenüber Fluid oder sonstigen oxidierenden und/oder verschmutzenden Stoffen geschützt sind.

Auch bei einer Längsbewegung der Fluidleitung 11 im Anschlussstück 10 sitzt der Dichtring 45 auf Grund der Federmittel 37 zuverlässig auf der Stirnseite 20 auf. Ferner, und das ist hier besonders wichtig, bleiben die Signalkontakte 31a, 31b relativ zur Fluidleitung 11 in Längsrichtung in einer im Wesentlichen festen Position. Sie federn sozusagen in Längsrichtung bei einer Längsbewegung der Fluidleitung 11 mit und halten so zuverlässig den Kontakt zu den Signalleitern 16a, 16b.

Prinzipiell wäre es zwar möglich, dass die Signalkontakte 31a, 31b in Längsrichtung beweglich in den Abschnitten 48 der Signalkanäle 17 liegen. Vorliegend jedoch weisen die Signalkontakte 31a, 31b einen derartigen Querschnitt und/oder eine derartige Oberfläche auf, dass sie in den Abschnitten 48 reibschlüssig vorzugsweise sogar in Klemmsitz gehalten werden. Der Querschnitt der Signalkontakte 31a, 31b ist z.B. größer als der der Signalkanäle 17. Die Oberfläche ist z.B. rauh, gerippt, geriffelt oder dergleichen.

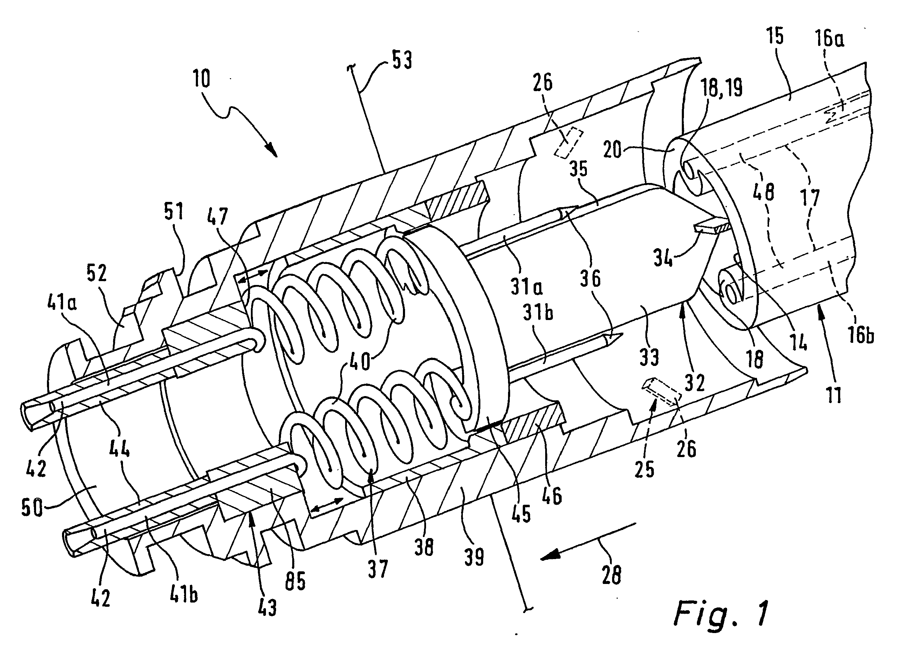

Bei der Kontaktierung der Signalkontakte 31a, 31b mit den Signalleitern 16a, 16b sind mehrere Varianten möglich. Beispielsweise können die Signalkontakte 31a, 31b die Signalleiter 16a, 16b ganz oder teilweise aus den Abschnitten 48 verdrängen, wie es in Figur 1 angedeutet ist. Es ist aber auch möglich, dass die Signalkontakte 31a, 31b benachbart zu den Signalleitern 16a, 16b in die Signalleiterkanäle 17 eindringen und/oder in die Signalleiter 16a, 16b eindringen oder einstechen, so dass die Signalleiter 16a, 16b in den Abschnitten 48 zumindest teilweise benachbart zu den Signalkontakten 31a, 31b zu liegen kommen. Diese Variante ist besonders bevorzugt, da sie eine gute elektrische Verbindung ermöglicht.

Zwar ist die langgestreckte Form der Signalkontakte 31a, 31b und somit deren Eindringen in die Signalleiterkanäle 17 besonders bevorzugt. Prinzipiell wäre es aber auch möglich, dass beispielsweise am Dichtring 45 flach anliegende oder zur Einstecköffnung 21 hin gewölbte Kontaktflächen angeordnet sind, die vorzugsweise als Federkontakte ausgestaltet sind. Derartige Kontakte könnten eine zuverlässige Verbindung zu den Signalleitern 16a, 16b auch dann herstellen, wenn diese bündig mit der Stirnseite 20 abschließen.

Zwischen der Haltevorrichtung 25 und dem Stützring 46 ist eine Fluid-Dichtung 86 in Form eines O-Rings vorgesehen, die bei in das Anschlussstück 10 eingesteckter Fluidleitung 11 an deren Außenseite anliegt und fluidisch abdichtet. Fluid aus dem Fluidkanal 11 kann daher am Kontaktträger 38 vorbei, vorliegend durch diesen hindurch, zu einer Anschlussöffnung 50 an der der Einstecköffnung 21 entgegengesetzten Seite des Anschlussstücks 10 strömen und von dort beispielsweise zu einer Kolbenkammer des Arbeitszylinders 62 gelangen.

Zum Lösen der Fluidleitung 11 aus der Haltevorrichtung 25 wird der Lösering 24 in Einsteckrichtung 28 verschoben, wobei die Zungen 33 vom Außenumfang der Fluidleitung 11 abheben, so dass diese aus dem Anschlussstück 10 herausgezogen werden kann.

Das Gehäuse 39 des Anschlussstücks 10 weist außenseitig Abstufungen 51 sowie eine in einer durch die Abstufungen 51 gebildeten Nut 52 sitzende Dichtung 49 auf, so dass es beispielsweise in ein Gehäuse 53 des Arbeitszylinders 62 eingeschraubt oder gepresst werden kann.

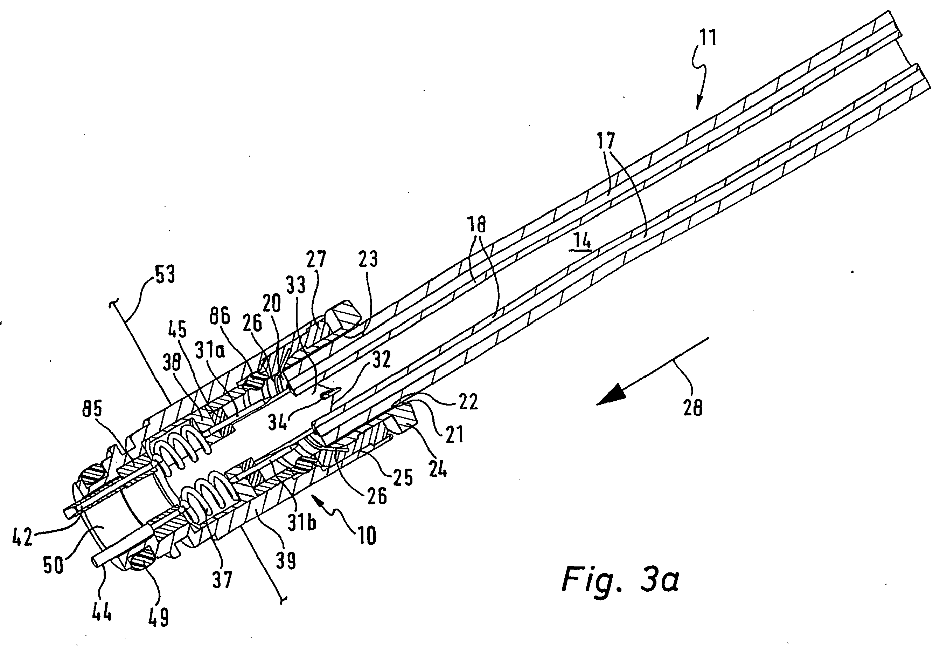

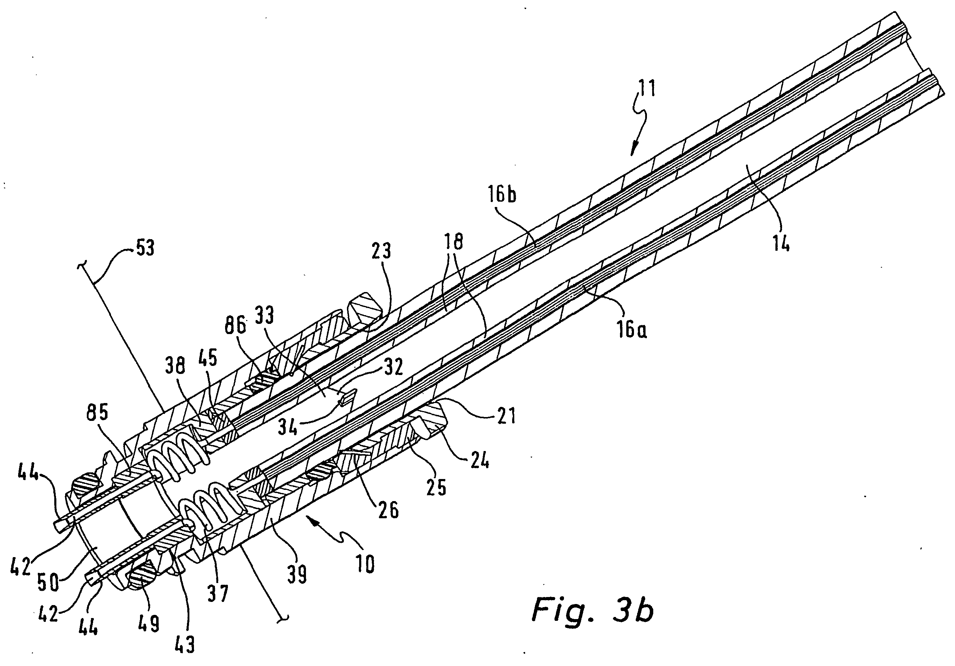

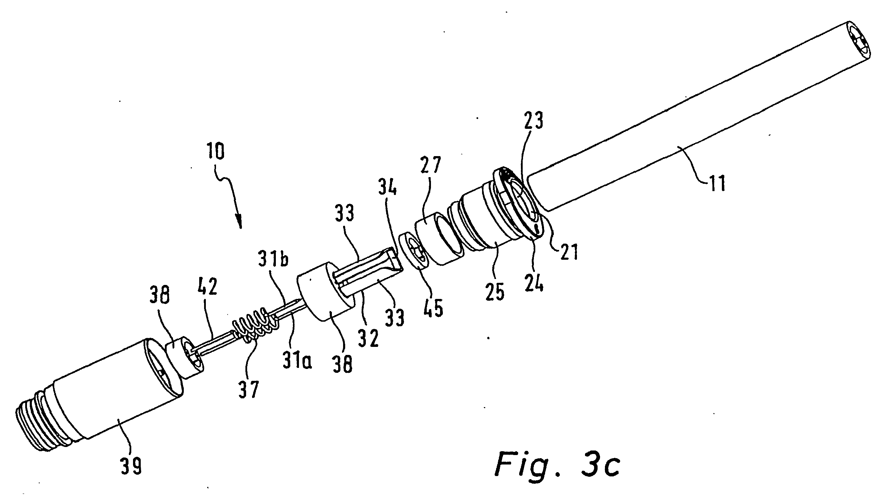

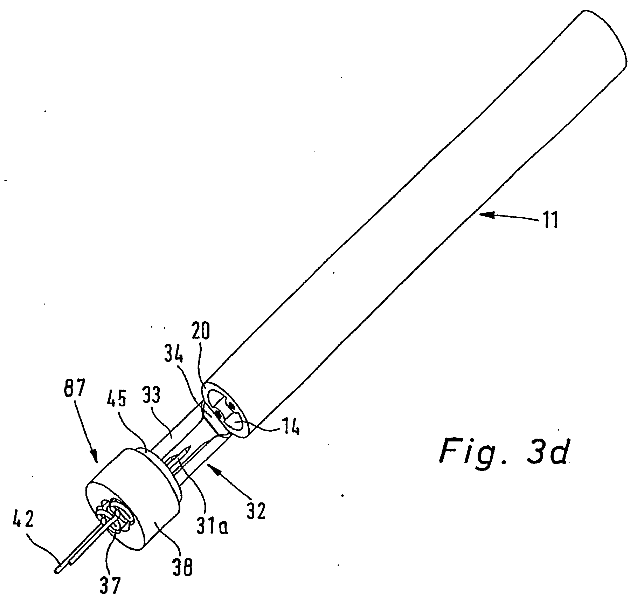

Allerdings könnte das Gehäuse eines Anschlussstücks prinzipiell auch von einem Gehäuse einer fluidtechnischen Einrichtung, z.B. vom Gehäuse 53, gebildet werden. Beispielsweise könnte das in Figur 3d gezeigte Anschlussstück 87, das im Unterschied zum Anschlussstück 10 kein eigenes Gehäuse aufweist, in ein Gehäuse einer fluidtechnischen Einrichtung eingebaut werden.

Vorliegend ist die Fluidleitung 11 außenseitig kalibriert, was an einem besonders druckdichten Anschluss am Anschlussstück 10 ermöglicht. Zur Druckdichtigkeit trägt auch bei, dass die Fluidleitung 11 außenseitig eine kreisrunde Kontur aufweist. Hierzu sei allerdings angemerkt, dass prinzipiell auch andere Außenkonturen möglich wären, beispielsweise in Form eines Polygons oder einer Ellipse.

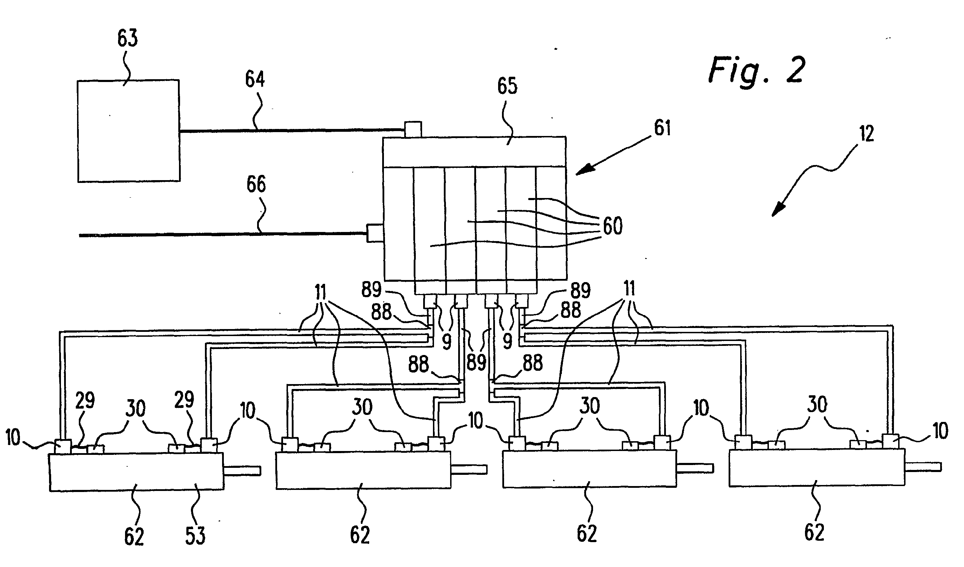

Es ist bevorzugt, dass die Fluidleitung 11 in ihrer Längserstreckungsrichtung einen durchgehend gleichartigen Querschnitt aufweist, so dass sie beliebig ablängbar ist. Möglich sind aber auch Varianten, bei denen eine Fluidleitung Verzweigungen aufweist, wie beispielsweise in Figur 2 gezeigt. Dabei kann die Leitung selbst Verzweigungen aufweisen und/oder es sind wie in Figur 2 beispielsweise T-Verbindungsstücke 88 zur Bildung von Verzweigungen vorgesehen. Die Anschlussstücke 9 der Ventilanordnungen 60 können beispielsweise zur Aufnahme von je zwei Fluidleitungen des Typs der Fluidleitung 11 vorgesehen sein oder z.B. zur Aufnahme einer Fluidleitung 89 mit z.B. zwei Fluidkanälen, von denen je einer am jeweiligen T-Verbindungsstück 88 in einen Fluidkanal einer Fluidleitung 11 verzweigt.

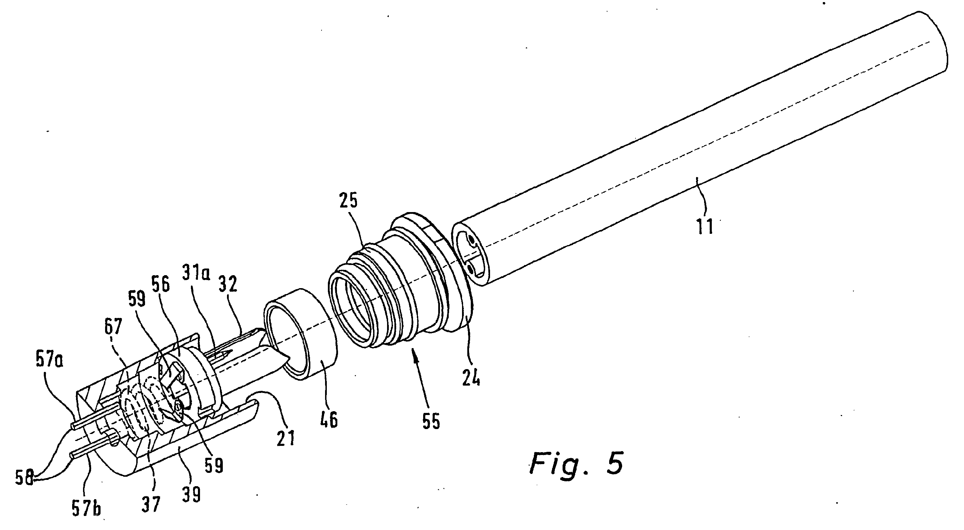

Das in Figur 5 gezeigte Anschlussstück 13 weist prinzipiell denselben Aufbau auf wie das Anschlussstück 10. Gleichartige Komponenten sind mit denselben Bezugszeichen versehen. Die Unterschiede werden im Folgenden erläutert.

Die Haltevorrichtung 25 und der Lösering 24 bilden eine Baueinheit 55, die in das Gehäuse 39 einsteckbar ist. In diesem ist in Einsteckrichtung 28 verschieblich ein Kontaktträger 56 angeordnet, der im Wesentlichen dieselbe Funktion wie der Kontaktträger 38 hat: an ihm sind die Signalkontakte 31a, 31b quer zur Einsteckrichtung 28 festgelegt und zudem ist an ihm die Führungseinrichtung 32 angeordnet. Anstelle der Zuleitung 41a, 41b sind Zuleitungen 57a, 57b vorgesehen, die vor das Gehäuse 39 vorstehende Kontaktstifte 58 sowie zwischen den Kontaktstiften 58 und den Signalkontakten 31a, 31b angeordnete Federkontakte 59 enthalten. Die Federkontakte 59 dienen zum einen der elektrischen Signalübertragung zwischen den Kontakten 31a, 31b und den Kontaktstiften 58 und zum andern als erfindungsgemäße Federmittel 37, die den Kontaktträger 56 in Richtung der Einstecköffnung 21 vorspannen.

Gestrichelt eingezeichnet ist eine Feder 67, die anstelle oder in Ergänzung der Federkontakte 59 die Funktion erfindungsgemäßer Federmittel 37 erfüllen könnte. Die Kontakte 31a, 31b und die Kontaktstifte 58 könnten mit (nicht dargestellten) flexiblen Leitungen anstatt mit den Federkontakten 59 miteinander verbunden sein.

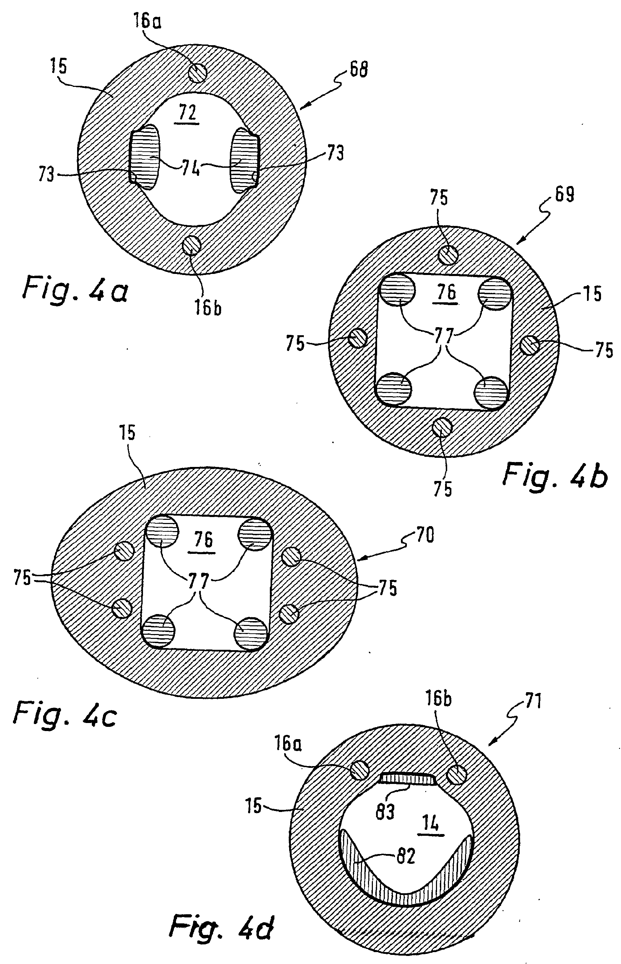

Verschiedene Varianten erfindungsgemäßer Drehwinkelcodierungen sind bei Fluidleitern 68 bis 71 gemäß Figuren 4a bis 4d gezeigt. Im Folgenden sind gleichwirkende Komponenten mit den aus den Figuren 1 bis 3 bekannten Bezugszeichen versehen.

Die Wandung 15 des Fluidleiters 68 ist außenseitig kreisrund, umschließt innenseitig jedoch einen eher elliptischen Fluidkanal 72. Zudem sind an der Innenseite der Wandung 15 einander gegenüberliegende Nuten 73 angeordnet, die eine Drehwinkelcodierung bilden. In den Nuten 73 sind Nutenstücke 74 angeordnet, die eine erfindungsgemäße Führungseinrichtung bilden. Die Nutenstücke 74 sind beispielsweise ähnlich wie die Zungen 33 vorderseitig spitz zulaufend, so dass sie leicht in die Nuten 73 eingeführt werden können. Beim Einführen der Nutenstücke 74 in den Fluidkanal 72 sind prinzipiell zwei alternative Drehwinkelstellungen der Fluidleitung 68 relativ zum Anschlussstück möglich, bei denen die in der Wandung 15 angeordneten Signalleiter 16a, 16b mit den ihnen zugeordneten Signalkontakten am Anschlussstück in Kontakt treten können.

Vier potentielle Drehwinkelstellungen sind bei der Fluidleitung 69 gemäß Figur 4b möglich, die außenseitig eine kreisrunde Kontur aufweist und innenseitig einen Fluidkanal 76 mit im Wesentlichen quadratischem Querschnitt, der eine Drehwinkelcodierung bildet. An den Seitenkanten dieses Fluidkanals 76 liegen beispielsweise als Führungsstäbe ausgestaltete Führungselemente 77 einer erfindungsgemäßen Führungseinrichtung an. Jeweils etwa in der Mitte der Seitenflächen des Fluidkanals 76, also dort wo die Wandung 15 ihre größte Dicke aufweist, sind Signalleiter 75 angeordnet.

Die Fluidleitung 70 gemäß Figur 4c weist eine elliptische Außenkontur auf und ebenfalls den aus Figur 4b bekannten, im Querschnitt im Wesentlichen quadratischen Fluidkanal 76, in den Führungselemente 77 eingesteckt sind. Bei der Fluidleitung 70 bilden sowohl dessen Außenkontur als auch der quadratische Querschnitt des Fluidkanals 76 eine Drehwinkelcodierung. Bei der Fluidleitung 70 sind vier Signalleiter 78 vorgesehen, die im Bereich gegenüberliegender Seitenflächen des Fluidkanals 76 jeweils paarweise angeordnet sind. Auch hier liegen die Signalleiter 78 wie bei der Fluidleitung 69 dort, wo die Wandung 15 ihre größte Dicke aufweist.

Im Unterschied zu allen vorgenannten Beispielen ist bei der Fluidleitung 71 nur eine einzige Drehwinkelposition beim Anschluss an ein für sie geeignetes Anschlussstück 79 möglich. Eine solche variante wählt man beispielsweise dann, wenn nur ein einziger Signalleiter vorhanden ist oder wenn mehrere Signalleiter, bei der Fluidleitung 71 beispielsweise zwei Signalleiter 80, verpolungssicher angeschlossen werden sollen. Das Anschlussstück 79 weist eine Führungseinrichtung 81 mit einer Nase 83 und eine dieser gegenüberliegenden Zunge 82 auf. Die Nase 83 ist an einer eine Drehwinkelcodierung bildenden Nut 84 der Wandung 15 geführt. Die Zunge 82 liegt an der Nut 84 gegenüberliegenden, im Wesentlichen kreisförmigen Abschnitt der Wandung 15 an.

## Patentansprüche

1. Anschlussstück für eine einen Fluidkanal (14) enthaltende Fluidleitung (11; 68-71), deren Wandung (15) mindestens einen Signalleiter (16a, 16b; 75; 78) zur Übertragung elektrischer und/oder optischer Signale aufweist, mit einer Steckaufnahme (23) für die Fluidleitung (11; 68-71), mit einer Haltevorrichtung (25) zum Halten der Fluidleitung (11; 68-71) in montiertem Zustand und mit mindestens einem Signalkontakt (31a; 31b) zur Herstellung einer Verbindung mit dem mindestens einen Signalleiter (16a, 16b; 75; 78), wobei der mindestens eine Signalkontakt (31a; 31b) in Einsteckrichtung (28) der Fluidleitung (11; 68-71) beweglich ist und dem mindestens einen Signalkontakt (31a; 31b) in Richtung zu einer Einstecköffnung (21) für die Fluidleitung (11; 68-71) wirkende Federmittel (37) zugeordnet sind, so dass in montiertem Zustand bei einer Längsbewegung der am Anschlussstück (10; 13; 79) montierten Fluidleitung (11; 68-71) der mindestens eine Signalkontakt (31a; 31b) mit der mindestens einen Signalleitung (16a, 16b; 75; 78) in Verbindung bleibt, **dadurch gekennzeichnet, dass** der mindestens eine Signalkontakt (31a; 31b) in Einsteckrichtung (28) der Fluidleitung (11; 68-71) verschieblich ist, dass der mindestens eine Signalleiter (16a, 16b; 75; 78) in einem Signalleiterkanal (17) der Fluidleitung (11; 68-71) angeordnet ist und dass der mindestens eine Signalkontakt (31a; 31b) derart ausgestaltet ist, dass er stirnseitig in einen Abschnitt (48) des Signalleiterkanals (17) eindringen kann.

2. Anschlussstück nach Anspruch 1, **dadurch gekennzeichnet, dass** der mindestens eine Signalkontakt (31a; 31b) an einem Kontaktträger (38; 56) festgelegt ist, der an dem Anschlussstück in der Einsteckrichtung (28) der Fluidleitung (11; 68-71) verschieblich gelagert ist.

3. Anschlussstück nach Anspruch 1 oder 2, **dadurch gekennzeichnet, dass** der mindestens eine Signalkontakt (31a; 31b) an der Fluidleitung (11; 68-71) relativ zu dem mindestens einen Signalleiter (16a, 16b; 75; 78) zumindest reibschlüssig festlegbar ist.

4. Anschlussstück nach einem der vorhergehenden Ansprüche, **dadurch gekennzeichnet, dass** dem mindestens einen Signalkontakt (31a; 31b) ein entgegen der Einsteckrichtung (28) wirkender Anschlag (47) zugeordnet ist, gegen den sich der mindestens eine Signalkontakt (31a; 31b) beim Einstecken der Fluidleitung (11; 68-71) in die Steckaufnahme (23) abstützen kann.

5. Anschlussstück nach einem der vorhergehenden Ansprüche, **dadurch gekennzeichnet, dass** der mindestens eine Signalkontakt (31a; 31b) eine Spitze zum Eindringen in den Signalleiterkanal (17) aufweist.

6. Anschlussstück nach einem der vorhergehenden Ansprüche, **dadurch gekennzeichnet, dass** der mindestens eine Signalkontakt (31a; 31b) derart ausgestaltet ist, dass er reibschlüssig, insbesondere in Klemmsitz in dem Signalleiterkanal (17) gehalten wird.

7. Anschlussstück nach einem der vorhergehenden Ansprüche, **dadurch gekennzeichnet, dass** es eine Kontakt-Dichteinrichtung (45) aufweist, die den mindestens einen Signalkontakt (31a; 31b) im montierten Zustand gegenüber dem mindestens einen Fluidkanal (14) abdichtet.

8. Anschlussstück nach einem der vorhergehenden Ansprüche, **dadurch gekennzeichnet, dass** die Federmittel (37) in Richtung der Einstecköffnung (21) vorgespannt sind.

9. Anschlussstück nach einem der vorhergehenden Ansprüche, **dadurch gekennzeichnet, dass** die Federmittel (37) als eine zu dem mindestens einen Signalkontakt (31a; 31b) führende Verbindungsleitung ausgestaltet sind.

10. Anschlussstück nach einem der vorhergehenden Ansprüche, **dadurch gekennzeichnet, dass** die Federmittel (37) mindestens eine von dem mindestens einen Signalkontakt (31a; 31b) separate Federanordnung (67) enthalten.

11. Anschlussstück nach einem der vorhergehenden Ansprüche, **dadurch gekennzeichnet, dass** im Bereich der Steckaufnahme (23) zum drehwinkelorientierten Anordnen der Fluidleitung (11; 68-71) eine Führungseinrichtung (32; 81) angeordnet ist, die in den mindestens einen Fluidkanal (14) einführbar ist und bei diesem Einführen an mindestens einer in dem mindestens einen Fluidkanal (14) angeordneten Drehwinkelcodierung (19) entlang gleitet, so dass die Fluidleitung (11; 68-71) vor einer Kontaktierung des mindestens einen Signalkontakts (31a; 31b) mit dem mindestens einen Signalleiter (16a, 16b; 75; 78) in eine vorbestimmte Drehwinkelstellung bringbar ist.

12. Anschlussstück nach Anspruch 11, **dadurch gekennzeichnet, dass** die Führungseinrichtung (32; 81) derart ausgestaltet ist, dass beim Einführen der Fluidleitung (11; 68-71) die vorbestimmte Drehwinkelstellung bereits vor einer Fixierung der Fluidleitung (11; 68-71) durch die Haltevorrichtung (25) erreichbar ist.

13. Anschlussstück nach Anspruch 11 oder 12, **dadurch gekennzeichnet, dass** die Führungseinrichtung (32; 81) an der Steckaufnahme (23) insbesondere zentral angeordnet ist.

14. Anschlussstück nach einem der Ansprüche 11 bis 13, **dadurch gekennzeichnet, dass** die Führungseinrichtung (32; 81) ausgestaltet ist, um die Fluidleitung (11; 68-71) an der Steckaufnahme (23) zu zentrieren.

15. Anschlussstück nach einem der Ansprüche 11 bis 14, **dadurch gekennzeichnet, dass** an der Steckaufnahme (23) ein Anschlag (45) für die Fluidleitung (11; 68-71) angeordnet ist, und dass die Führungseinrichtung (32; 81) vor den Anschlag vorsteht.

16. Anschlussstück nach einem der Ansprüche 11 bis 15, **dadurch gekennzeichnet, dass** die Führungseinrichtung (32; 81) mindestens eine mit der Drehwinkelcodierung (19) zusammenwirkende Steuerkurve (35) aufweist.

17. Anschlussstück nach einem der Ansprüche 11 bis 16, **dadurch gekennzeichnet, dass** die Drehwinkelcodierung (19) an der Innenseite der Wandung (15) der Fluidleitung (11; 68-71) angeordnet ist.

18. Anschlussstück nach einem der Ansprüche 11 bis 17, **dadurch gekennzeichnet, dass** die Drehwinkelcodierung (19) durch die Querschnittsgeometrie des Fluidkanals (14) und/oder durch mindestens eine Nut (73; 84) und/oder durch mindestens einen Vorsprung (18), in dem insbesondere der mindestens eine Signalleiter (16a, 16b; 75; 78) angeordnet ist, gebildet wird, und dass die Führungseinrichtung (32; 81) zur Zusammenwirkung mit der entsprechend ausgestalteten Drehwinkelcodierung (19) ausgestaltet ist.

19. Anschlussstück nach einem der Ansprüche 11 bis 18, **dadurch gekennzeichnet, dass** die Führungseinrichtung (32; 81) mindestens zwei an die Kontur des Fluidkanals (14) angepasste Zungen (33) enthält, die im montierten Zustand an der Kontur des Fluidkanals (14) anliegen und zweckmäßigerweise durch einen Stabilisierungssteg (34) miteinander verbunden sind.

20. Anschlussstück nach einem der Ansprüche 11 bis 19, **dadurch gekennzeichnet, dass** die vorbestimmte Drehwinkelstellung eine einzige Drehwinkelstellung ist oder dass der vorbestimmten Drehwinkelstellung mindestens eine zweite, rotationssymmetrische Drehwinkelstellung zugeordnet ist.

21. Anschlussstück nach einem der Ansprüche 11 bis 20, **dadurch gekennzeichnet, dass** die Führungseinrichtung (32; 81) an dem Kontaktträger (38; 56) angeordnet ist.

22. Verfahren zur Montage einer Fluidleitung an einem Anschlussstück (10; 13; 79), bei dem eine einen Fluidkanal (14) enthaltende Fluidleitung (11; 68-71), deren Wandung (15) mindestens einen Signalleiter (16a, 16b; 75; 78) zur Übertragung elektrischer und/oder optischer Signale aufweist, in eine Steckaufnahme (23) eines Anschlussstücks (10; 13; 79) eingesteckt wird, wobei in der Steckaufnahme eine Haltevorrichtung (25) zum Halten der Fluidleitung (11; 68-71) in montiertem Zustand und mindestens ein Signalkontakt (31a; 31b) zur Herstellung einer Verbindung mit dem mindestens einen Signalleiter (16a, 16b; 75; 78) vorhanden ist, **dadurch gekennzeichnet, dass** bei dem Einstecken der mindestens eine Signalkontakt (31a; 31b) stirnseitig in einen Abschnitt (48) eines Signalleiterkanals (17) der Fluidleitung (11; 68-71) eindringt, in dem der mindestens eine Signalleiter (16a, 16b; 75; 78) angeordnet ist, dass bei dem Einstecken der mindestens eine Signalkontakt (31a; 31b) in Einsteckrichtung (28) der Fluidleitung (11; 68-71) verschoben und dem mindestens einen Signalkontakt (31a; 31b) zugeordnete, in Richtung zu einer Einstecköffnung (21) (21) für die Fluidleitung (11; 68-71) wirkende Federmittel (37) vorgespannt werden, so dass bei einer Längsbewegung der am Anschlussstück (10; 13; 79) montierten Fluidleitung (11; 68-71) der mindestens eine Signalkontakt (31a; 31b) mit der mindestens einen Signalleitung (16a, 16b; 75; 78) in Verbindung bleibt.

23. Verfahren nach Anspruch 22, **dadurch gekennzeichnet, dass** bei dem Einstecken der Fluidleitung (11; 68-71) eine Führungseinrichtung (32; 81) des Anschlussstücks (10; 13; 79) an mindestens einer Drehwinkelcodierung (19) mindestens eines Fluidkanals (14) der Fluidleitung (11; 68-71) entlang gleitet.

24. Verfahren nach Anspruch 23, **gekennzeichnet durch** beliebiges Abschneiden der Fluidleitung (11; 68-71) zur Bildung der im Wesentlichen planen Stirnseite (20).

25. Verfahren nach einem der Ansprüche 22 bis 24, **dadurch gekennzeichnet, dass** die Fluidleitung (11; 68-71) als flexible Schlauchleitung und/oder als starre Rohrleitung ausgestaltet ist.

26. Verfahren nach einem der Ansprüche 22 bis 25, **dadurch gekennzeichnet, dass** die Wandung (15) der Fluidleitung (11; 68-71) außenseitig kalibriert ist.

27. Verfahren nach einem der Ansprüche 22 bis 26, **dadurch gekennzeichnet, dass** die Fluidleitung (11; 68-71) zumindest in ihrem für das Anschlussstück (10; 13; 79) vorgesehenen Anschlussbereich eine homogene Außenkontur ohne Vorsprünge und Nuten aufweist.

28. Verfahren nach einem der Ansprüche 22 bis 27, **dadurch gekennzeichnet, dass** die Wandung (15) der Fluidleitung (11; 68-71) im Wesentlichen aus Kunststoff besteht.

29. Verfahren nach einem der Ansprüche 22 bis 28, **dadurch gekennzeichnet, dass** der mindestens eine Signalleiter (16a, 16b; 75; 78) in der Wandung (15) der Fluidleitung (11; 68-71) in der Längserstreckungsrichtung der Fluidleitung (11; 68-71) insbesondere durch Einwirkung des mindestens einen Signalkontaktes (31a; 31b) kompressibel ist.

30. Fluidtechnische Einrichtung, insbesondere Ventilanordnung, Wartungsgerät oder Steuereinrichtung für mindestens eine Ventilanordnung und/oder mindestens ein Wartungsgerät, mit mindestens einem Anschlussstück (10; 13; 79) nach einem der Ansprüche 1 bis 21.

31. Fluidtechnische Einrichtung nach Anspruch 30, **dadurch gekennzeichnet, dass** das mindestens eine Anschlussstück (10; 13; 79) einen integralen Bestandteil der fluidtechnischen Einrichtung bildet und insbesondere zumindest teilweise durch ein Gehäuse (53) der fluidtechnischen Einrichtung gebildet wird.

## Claims

1. Connecting piece for a fluid line (11; 68-71) containing a fluid passage (14) and with a wall (15) incorporating at least one signal conductor (16a, 16b; 75; 78) for the transmission of electric and/or optical signals, with a plug-in socket (23) for the fluid line (11; 68-71), with a retaining device (25) for retaining the fluid line (11; 68-71) in the installed state and with at least one signal contact (31a; 31b) for establishing a connection to the at least one signal conductor (16a, 16b; 75; 78), wherein the at least one signal contact (31a; 31b) is movable in the direction of insertion (28) of the fluid line (11; 68-71) and wherein spring means (37) acting in the direction towards an insertion opening (21) for the fluid line (11; 68-71) are assigned to the at least one signal contact (31a; 31b), so that, at any longitudinal movement of the fluid line (11; 68-71) mounted on the connecting piece (10; 13; 79), the at least one signal contact (31a; 31b) remains connected to the at least one signal conductor (16a, 16b; 75; 78) in the installed state, **characterised in that** the at least one signal contact (31a; 31b) is movable in the direction of insertion (28) of the fluid line (11; 68-71), **in that** the at least one signal conductor (16a, 16b; 75; 78) is located in a signal conductor conduit (17) of the fluid line (11; 68-71), and **in that** the at least one signal contact (31a; 31b) is designed for end penetration into a section (48) of the signal conductor conduit (17).

2. Connecting piece according to claim 1, **characterised in that** the at least one signal contact (31a; 31b) is attached to a contact carrier (38; 56) mounted on the connecting piece for movement in the direction of insertion (28) of the fluid line (11; 68-71).

3. Connecting piece according to claim 1 or 2, **characterised in that** the at least one signal contact (31a; 31b) can be located on the fluid line (11; 68-71) relative to the at least one signal conductor (16a, 16b; 75; 78) at least by frictional engagement.

4. Connecting piece according to any of the preceding claims, **characterised in that** a stop (47) acting against the direction of insertion (28) is assigned to the at least one signal contact (31a; 31b), against which the at least one signal contact (31a; 31b) can be supported when the fluid line (11; 68-71) is inserted into the plug-in socket (23).

5. Connecting piece according to any of the preceding claims, **characterised in that** the at least one signal contact (31a; 31b) has a point for penetrating into the signal conductor conduit (17).

6. Connecting piece according to any of the preceding claims, **characterised in that** the at least one signal contact (31a; 31b) is designed for retention in the signal conductor conduit (17) by frictional engagement, in particular by clamping.

7. Connecting piece according to any of the preceding claims, **characterised in that** is incorporates a contact sealing device (45) for sealing the at least one signal contact (31a; 31b) in the installed state against the at least one fluid passage (14).

8. Connecting piece according to any of the preceding claims, **characterised in that** the spring means (37) are preloaded towards the insertion opening (21).

9. Connecting piece according to any of the preceding claims, **characterised in that** the spring means (37) are designed as a connecting line leading to the at least one signal contact (31a; 31b).

10. Connecting piece according to any of the preceding claims, **characterised in that** the spring means (37) comprise at least one spring assembly (67) separate from the at least one signal contact (31a; 31b).

11. Connecting piece according to any of the preceding claims, **characterised in that**, in the area of the plug-in socket (23), there is located a guide device (32; 81) for the rotary angle-oriented location of the fluid line (11; 68-71), which is insertable into the at least one fluid passage (14) and in the process of insertion slides along at least one rotary angle encoder (19) located in the at least one fluid passage (14), so that the fluid line (11; 68-71), before contact is established between the at least one signal contact (31a; 31b) and the at least one signal conductor (16a, 16b; 75; 78), can be brought into a predetermined rotary angle position.

12. Connecting piece according to claim 11, **characterised in that** the guide device (32; 81) is so designed that, in the process of inserting the fluid line (11; 68-71), the predetermined rotary angle position can be reached before the fluid line (11; 68-71) is held by the retaining device (25).

13. Connecting piece according to claim 11 or 12, **characterised in that** the guide device (32; 81) is, in particular centrally, located on the plug-in socket (23).

14. Connecting piece according to any of claims 11 to 13, **characterised in that** the guide device (32; 81) is designed to centre the fluid line (11; 68-71) on the plug-in socket (23).

15. Connecting piece according to any of claims 11 to 14, **characterised in that** a stop (45) for the fluid line (11; 68-71) is arranged on the plug-in socket (23), and **in that** the guide device (32; 81) projects in front of the stop.

16. Connecting piece according to any of claims 11 to 15, **characterised in that** the guide device (32; 81) has at least one control cam (35) acting together with the rotary angle encoder (19).

17. Connecting piece according to any of claims 11 to 16, **characterised in that** the rotary angle encoder (19) is located on the inside of the wall (15) of the fluid line (11; 68-71).

18. Connecting piece according to any of claims 11 to 17, **characterised in that** the rotary angle encoder (19) is formed by the cross-sectional geometry of the fluid passage (14) and/or by at least one groove (73; 84) and/or by at least one projection (18) in which the at least one signal conductor (16a, 16b; 75; 78) is located, and **in that** the guide device (32; 81) is designed to act together with the correspondingly designed rotary angle encoder (19).

19. Connecting piece according to any of claims 11 to 18, **characterised in that** the guide device (32; 81) incorporates at least two tabs (33) matching the contour of the fluid passage (14), which contact the fluid passage (14) in the installed state and are expediently joined to one another by a stabilising web (34).

20. Connecting piece according to any of claims 11 to 19, **characterised in that** the predetermined rotary angle position is a single rotary angle position, or **in that** at least one second, rotationally symmetrical rotary angle position is assigned to the predetermined rotary angle position.

21. Connecting piece according to any of claims 11 to 20, **characterised in that** the guide device (32; 81) is located on the contact carrier (38; 56).

22. Method for mounting a fluid line on a connecting piece (10; 13; 79), wherein a fluid line (11; 68-71) containing a fluid passage (14) and with a wall (15) incorporating at least one signal conductor (16a, 16b; 75; 78) for the transmission of electric and/or optical signals is inserted into a plug-in socket (23) of a connecting piece (10; 13; 79), wherein the plug-in socket incorporates a retaining device (25) for retaining the fluid line (14) in the installed state and at least one signal contact (31a; 31b) for establishing a connection with the at least one signal conductor (16a, 16b; 75; 78), **characterised in that**, in the process of insertion, the at least one signal contact (31 a; 31b) penetrates into the end of a section (48) of a signal conductor conduit (17) of the fluid line (11; 68-71), in which at least one signal conductor (16a, 16b; 75; 78) is located, **in that**, in the process of insertion, the at least one signal contact (31a; 31b) is displaced in the direction of insertion (28) of the fluid line (11; 68-71) and spring means (37) assigned to the at least one signal contact (31a; 31b) and acting in the direction towards an insertion opening (21) for the fluid line (11; 68-71) are preloaded, so that, at any longitudinal movement of the fluid line (11; 68-71) mounted on the connecting piece (10; 13; 79), the at least one signal contact (31a; 31b) remains connected to the at least one signal conductor (16a, 16b; 75; 78).

23. Method according to claim 22, **characterised in that**, in the process of inserting the fluid line (11; 68-71), a guide device (32; 81) of the connecting piece (10; 13; 79) slides along at least one rotary angle encoder (19) of at least one fluid passage (14) of the fluid line (11; 68-71).

24. Method according to claim 23, **characterised by** cutting the fluid line (11; 68-71) as required to obtain an essentially flat end face.

25. Method according to any of claims 22 to 24, **characterised in that** the fluid line (11; 68-71) is designed as a flexible hose and/or as a rigid pipeline.

26. Method according to any of claims 22 to 25, **characterised in that** the wall (15) of the fluid line (11; 68-71) is externally calibrated.

27. Method according to any of claims 22 to 26, **characterised in that** the fluid line (11; 68-71) has a homogeneous external contour without any projections and grooves at least in the area designed for connecting the connecting piece (10; 13; 79).

28. Method according to any of claims 22 to 27, **characterised in that** the wall (15) of the fluid line (11; 68-71) substantially consists of a plastic material.

29. Method according to any of claims 22 to 28, **characterised in that** the at least one signal conductor (16a, 16b; 75; 78) is compressible in the wall (15) of the fluid line (11; 68-71) in the longitudinal direction of the fluid line (11; 68-71), in particular by the action of the at least one signal contact (31a; 31b).

30. Fluid power device, in particular valve assembly, service unit or control unit for at least one valve assembly and/or at least one service unit, with at least one connecting piece (10; 13; 79) according to any of claims 1 to 21.

31. Fluid power device according to claim 30, **characterised in that** the at least one connecting piece (10; 13; 79) represents an integral part of the fluid power device and is in particular at least partly represented by a housing (53) of the fluid power unit.

## Revendications

1. Pièce de raccordement pour une conduite de fluide (11; 68-71), qui contient un canal pour fluide (14) et dont la paroi (15) comporte au moins une ligne d'acheminement de signaux (16a, 16b ; 75 ; 78) destinée à transmettre des signaux électriques et/ou optiques, comportant un logement d'enfichage (23) pour la conduite de fluide (11 ; 68-71), un dispositif de retenue (25) destiné à maintenir la conduite de fluide (11 ; 68-71) en position montée, et au moins un contact de signalisation (31a ; 31b) destiné à établir une liaison avec ladite au moins une ligne d'acheminement de signaux (16a, 16b ; 75 ; 78), ledit au moins un contact de signalisation (31a ; 31b) étant mobile dans le sens d'introduction (28) de la conduite de fluide (11 ; 68-71) et ledit au moins un contact de signalisation (31a ; 31b) étant associé à des moyens à ressort (37) agissant dans la direction d'un orifice d'introduction (21) pour la conduite de fluide (11 ; 68-71), de telle sorte que, dans la position montée, ledit au moins un contact de signalisation (31a ; 31b) reste en liaison avec ladite au moins une ligne d'acheminement de signaux (16a, 16b ; 75 ; 78) lorsque la conduite de fluide (11 ; 68-71), montée sur la pièce de raccordement (10 ; 13 ; 79), effectue un mouvement longitudinal, **caractérisée en ce que** ledit au moins un contact de signalisation (31a ; 31 b) est mobile dans le sens d'introduction (28) de la conduite de fluide (11 ; 68-71), **en ce que** ladite au moins une ligne d'acheminement de signaux (16a, 16b ; 75 ; 78) est agencée dans un canal pour ligne d'acheminement de signaux (17) de la conduite de fluide (11 ; 68-71) et **en ce que** ledit au moins un contact de signalisation (31a; 31b) est conçu de telle sorte qu'il peut pénétrer du côté frontal dans un tronçon (48) du canal pour ligne d'acheminement de signaux (17).

2. Pièce de raccordement selon la revendication 1, **caractérisée en ce que** ledit au moins un contact de signalisation (31a ; 31b) est fixé sur un porte-contacts (38 ; 56), qui est monté au niveau de la pièce de raccordement en étant mobile dans le sens d'introduction (28) de la conduite de fluide (11 ; 68-71).

3. Pièce de raccordement selon la revendication 1 ou 2, **caractérisée en ce que** ledit au moins un contact de signalisation (31a ; 31b) peut être fixé sur la conduite de fluide (11 ; 68-71) par rapport à ladite au moins une ligne d'acheminement de signaux (16a, 16b ; 75 ; 78) en formant au moins un assemblage par frottement.

4. Pièce de raccordement selon l'une quelconque des revendications précédentes, **caractérisée en ce que** ledit au moins un contact de signalisation (31a ; 31b) est associé à une butée (47), qui agit dans le sens opposé au sens d'introduction (28) et contre laquelle peut venir en appui ledit au moins un contact de signalisation (31a ; 31b) au moment de l'introduction de la conduite de fluide (11 ; 68-71) dans le logement d'enfichage (23).

5. Pièce de raccordement selon l'une quelconque des revendications précédentes, **caractérisée en ce que** ledit au moins un contact de signalisation (31a ; 31b) comporte une pointe destinée à pénétrer dans le canal pour ligne d'acheminement de signaux (17).

6. Pièce de raccordement selon l'une quelconque des revendications précédentes, **caractérisée en ce que** ledit au moins un contact de signalisation (31a ; 31b) est conçu de telle sorte qu'il est maintenu par frottement, en particulier par un ajustage serré dans le canal pour ligne d'acheminement de signaux (17).

7. Pièce de raccordement selon l'une quelconque des revendications précédentes, **caractérisée en ce qu'**elle comporte un dispositif de contact et d'étanchéité (45), par lequel ledit au moins un contact de signalisation (31a ; 31b), dans la position montée, est rendu étanche face audit au moins un canal pour fluide (14).

8. Pièce de raccordement selon l'une quelconque des revendications précédentes, **caractérisée en ce que** les moyens à ressort (37) sont précontraints vers l'orifice d'introduction (21).

9. Pièce de raccordement selon l'une quelconque des revendications précédentes, **caractérisée en ce que** les moyens à ressort (37) sont conçus sous forme de conduit de liaison menant vers ledit au moins un contact de signalisation (31a ; 31b).

10. Pièce de raccordement selon l'une quelconque des revendications précédentes, **caractérisée en ce que** les moyens à ressort (37) comportent au moins un système à ressort (67) séparé dudit au moins un contact de signalisation (31a ; 31b).

11. Pièce de raccordement selon l'une quelconque des revendications précédentes, **caractérisée en ce qu'**un dispositif de guidage (32 ; 81) est agencé dans la zone du logement d'enfichage (23) en vue d'ajuster l'orientation angulaire de la conduite de fluide (11 ; 68-71), lequel dispositif de guidage peut s'engager dans ledit au moins un canal pour fluide (14) et, au moment de cet engagement, glisse le long d'au moins un repère d'angle de rotation (19) agencé dans ledit au moins un canal pour fluide (14), de telle sorte que la conduite de fluide (11 ; 68-71) peut être amenée dans une position angulaire prédéfinie avant que ledit au moins un contact de signalisation (31a ; 31b) entre en contact avec ladite au moins une ligne d'acheminement de signaux (16a, 16b ; 75 ; 78).

12. Pièce de raccordement selon la revendication 11, **caractérisée en ce que** le dispositif de guidage (32 ; 81) est conçu de telle sorte que, au moment de l'introduction de la conduite de fluide (11 ; 68-71), la position angulaire prédéfinie peut être atteinte déjà avant que la conduite de fluide (11 ; 68-71) ne soit bloquée par le dispositif de retenue (25).

13. Pièce de raccordement selon la revendication 11 ou 12, **caractérisée en ce que** le dispositif de guidage (32 ; 81) est agencé, en particulier centré, au niveau du logement d'enfichage (23).

14. Pièce de raccordement selon l'une quelconque des revendications 11 à 13, **caractérisée en ce que** le dispositif de guidage (32 ; 81) est conçu pour centrer la conduite de fluide (11 ; 68-71) sur le logement d'enfichage (23).

15. Pièce de raccordement selon l'une quelconque des revendications 11 à 14, **caractérisée en ce qu'**une butée (45) pour la conduite de fluide (11 ; 68-71) est agencée sur le logement d'enfichage (23) et **en ce que** le dispositif de guidage (32 ; 81) est en saillie devant la butée.

16. Pièce de raccordement selon l'une quelconque des revendications 11 à 15, **caractérisée en ce que** le dispositif de guidage (32 ; 81) comporte au moins une courbe de commande (35) coopérant avec le repère d'angle de rotation (19).

17. Pièce de raccordement selon l'une quelconque des revendications 11 à 16, **caractérisée en ce que** le repère d'angle de rotation (19) est disposé sur la face intérieure de la paroi (15) de la conduite de fluide (11 ; 68-71).

18. Pièce de raccordement selon l'une quelconque des revendications 11 à 17, **caractérisée en ce que** le repère d'angle de rotation (19) est formé par la géométrie de la section du canal pour fluide (14) et/ou par au moins une rainure (73 ; 84) et/ou par au moins une saillie (18), dans laquelle est agencée en particulier ladite au moins une ligne d'acheminement de signaux (16a, 16b ; 75 ; 78), et **en ce que** le dispositif de guidage (32 ; 81) est conçu pour coopérer avec le repère d'angle de rotation (19) conçu en conséquence.

19. Pièce de raccordement selon l'une quelconque des revendications 11 à 18, **caractérisée en ce que** le dispositif de guidage (32 ; 81) comporte au moins deux pattes (33), qui sont adaptées au contour du canal pour fluide (14) et qui, dans la position montée, sont en appui sur le contour du canal pour fluide (14) et, de manière judicieuse, sont reliées l'une à l'autre par une barrette de stabilisation (34).

20. Pièce de raccordement selon l'une quelconque des revendications 11 à 19, **caractérisée en ce que** la position angulaire prédéfinie est une position angulaire unique ou **en ce qu'**au moins une deuxième position angulaire à symétrie de révolution est associée à la position angulaire prédéfinie.

21. Pièce de raccordement selon l'une quelconque des revendications 11 à 20, **caractérisée en ce que** le dispositif de guidage (32 ; 81) est agencé sur le porte-contacts (38 ; 56).

22. Procédé de montage d'une conduite de fluide sur une pièce de raccordement (10 ; 13 ; 79), dans lequel une conduite de fluide (11 ; 68-71), qui contient un canal pour fluide (14) et dont la paroi (15) comporte au moins une ligne d'acheminement de signaux (16a, 16b ; 75 ; 78) destinée à transmettre des signaux électriques et/ou optiques, est enfichée dans un logement d'enfichage (23) d'une pièce de raccordement (10 ; 13 ; 79), un dispositif de retenue (25) destiné à maintenir la conduite de fluide (11 ; 68-71) en position montée, et au moins un contact de signalisation (31a ; 31b) destiné à établir une liaison avec ladite au moins une ligne d'acheminement de signaux (16a, 16b ; 75 ; 78) étant disposés dans le logement d'enfichage, **caractérisé en ce que**, pendant le processus d'introduction, ledit au moins un contact de signalisation (31a ; 31b) peut pénétrer du côté frontal dans un tronçon (48) d'un canal pour ligne d'acheminement de signaux, (17) de la conduite de fluide (11 ; 68-71), dans lequel canal est agencée ladite au moins une ligne d'acheminement de signaux (16a, 16b ; 75; 78), **en ce que**, pendant le processus d'introduction, ledit au moins un contact de signalisation (31a ; 31b) est déplacé dans le sens d'introduction (28) de la conduite de fluide (11 ; 68-71) et les moyens à ressort (37), associés audit au moins un contact de signalisation (31a ; 31b) et agissant dans la direction d'un orifice d'introduction (21) pour la conduite de fluide (11 ; 68-71), sont précontraints, de telle sorte que ledit au moins un contact de signalisation (31a ; 31b) reste en liaison avec ladite au moins une ligne d'acheminement de signaux (16a, 16b ; 75 ; 78) lorsque la conduite de fluide (11 ; 68-71), montée sur la pièce de raccordement (10; 13 ; 79), effectue un mouvement longitudinal.

23. Procédé selon la revendication 22, **caractérisé en ce que**, pendant l'introduction de la conduite de fluide (11 ; 68-71), un dispositif de guidage (32 ; 81) de la pièce de raccordement (10 ; 13 ; 79) glisse le long d'au moins un repère d'angle de rotation (19) dans ledit au moins un canal pour fluide (14) de la conduite de fluide (11 ; 68-71).

24. Procédé selon la revendication 23, **caractérisé par** un sectionnement arbitraire de la conduite de fluide (11 ; 68-71) pour former la face frontale (20) sensiblement plane.

25. Procédé selon l'une quelconque des revendications 22 à 24, **caractérisé en ce que** la conduite de fluide (11 ; 68-71) est conçue sous forme de tuyau flexible et/ou sous forme de tube rigide.

26. Procédé selon l'une quelconque des revendications 22 à 25, **caractérisé en ce que** la paroi (15) de la conduite de fluide (11 ; 68-71) est calibrée sur la face extérieure.

27. Procédé selon l'une quelconque des revendications 22 à 26, **caractérisé en ce que** la conduite de fluide (11 ; 68-71), au moins dans sa partie prévue pour la pièce de raccordement (10 ; 13 ; 79), possède un contour extérieur homogène sans saillies et sans rainures.

28. Procédé selon l'une quelconque des revendications 22 à 27, **caractérisé en ce que** la paroi (15) de la conduite de fluide (11 ; 68-71) est réalisée pour l'essentiel en matière synthétique.

29. Procédé selon l'une quelconque des revendications 22 à 28, **caractérisé en ce que** ladite au moins une ligne d'acheminement de signaux (16a, 16b; 75 ; 78) dans la paroi (15) de la conduite de fluide (11 ; 68-71) est compressible dans le sens longitudinal de la conduite de fluide (11 ; 68-71), en particulier sous l'effet de l'action dudit au moins un contact de signalisation (31a ; 31b).

30. Système fluidique, en particulier système de soupapes, appareil de maintenance ou dispositif de commande pour au moins un système de soupapes et/ou au moins un appareil de maintenance, comportant au moins une pièce de raccordement (10 ; 13 ; 79) selon l'une quelconque des revendications 1 à 21.

31. Système fluidique selon la revendication 30, **caractérisé en ce que** ladite au moins une pièce de raccordement (10 ; 13 ; 79) constitue une partie intégrante du système fluidique et est formée, en particulier au moins en partie, par un boîtier (53) du système fluidique.
